# EUROPÄISCHE PATENTSCHRIFT

(11) **EP 1 930 231 B1**
(45) Veröffentlichungstag und Bekanntmachung des Hinweises auf die Patenterteilung: **22.04.2009**
(21) Anmeldenummer: 07022825.9
(22) Anmeldetag: 24.11.2007
(51) Int. Cl.: B62D 29/00

(54) **Verstärkungsbauteil**
Reinforcing component
Élément de renforcement

(30) Priorität: 05.12.2006 US 868620 P
(43) Veröffentlichungstag der Anmeldung: 11.06.2008
(73) Patentinhaber: Henkel AG & Co. KGaA, 40589 Düsseldorf (DE); Bayerische Motoren Werke Aktiengesellschaft, 80809 München (DE)
(72) Erfinder: Kochert, Stefan, 68799 Reilingen (DE); Dalhäuser, Ralph, 68519 Viernheim (DE); Straub, Alexander, 76275 Ettlingen (DE); Riess, Mark, 85777 Fahrenzhausen (DE); Becker, Jochen, 74918 Angelbachtal (DE); Stiller, Andreas, 69115 Heidelberg (DE); Hogger, Thomas, 81541 München (DE); Reindl, Josef, 85757 Karlsfeld (DE); Kempf, Jürgen, 81667 Münchem (DE); Eberle, Niklas, 80339 München (DE); Schalausky, Robert, 82345 Pöcking (DE)

(56) Entgegenhaltungen:
- WO-A-03/000535
- DE-U1- 29 812 841
- US-A1- 2005 082 872

## Beschreibung

Die Erfindung betrifft ein Verstärkungsbauteil auf der Basis eines Trägermaterials und einer thermisch expandierbaren und härtbaren Kleberschicht, sowie ein Karosseriebauteil enthaltend ein derartiges Verstärkungsbauteil.

Seit vielen Jahren ist die Automobilindustrie bestrebt, verbesserte Fahrzeugstrukturen bereit zustellen, die in der Lage sind, impuls- oder schlagartige Belastungen der Fahrgastzelle zu absorbieren oder abzulenken ("deflect"). Hierzu wurden beispielsweise Strukturen verwendet, die den Rahmen, der die Fahrgastzelle umgibt, durch metallische Komponenten verstärken oder versteifen. Diese metallischen Komponenten erhöhen jedoch in nicht erwünschter Weise das Fahrzeuggewicht. Andere Lösungswege sehen Verstärkungsteile aus komplex geformten Bauteilen vor, die durch Schweißen oder durch mechanische Befestigungsmittel mit dem Fahrzeugrahmen verbunden werden.

Die US-A-4,978,562 beschreibt einen spezifisch leichten, verstärkenden Türbalken aus einem Verbundmaterial bestehend aus einem Metallrohr, das teilweise durch ein spezifisch leichtes Polymer mit Zellstruktur gefüllt ist. Es wird vorgeschlagen, härtbare Harze auf der Basis von Epoxidharzen, Vinylesterharzen, ungesättigten Polyesterharzen und Polyurethanharzen mit den entsprechenden Härtern, Füllstoffen und zellbildenden Agenzien in einem Extruder zu mischen, diese Mischung zu einem Kern auszuhärten und so in das Metallrohr einzubringen, dass der Kern durch Reibungskräfte oder mechanisch in dem Rohr fixiert wird. Alternativ kann der Polymerkern aus flüssigem oder pastösem polymeren Material durch Gießen hergestellt werden und in das Rohr eingepresst werden.

In analoger Weise beschreiben die US-A-4,861,097 und US-A-4,901,500 spezifisch leichte Verbundbalken aus geschäumten Polymeren und metallischen Strukturen zur Verstärkung von Fahrzeugtüren. Nach dieser Lehre wird der polymere Kernteil zunächst durch Herstellen eines flüssigen oder pastösen Verstärkungsmaterials gebildet, das anschließend in eine kanalartige Struktur injiziert oder gegossen und anschließend ausgehärtet wird. Danach wird dieses ausgehärtete Kernteil in die metallische Hohlkörperstruktur eingebracht. Alternativ kann der Kern vorgeformt oder durch Spritzguss gegossen werden und anschließend in den Hohlraum eingelegt werden.

Die EP 1064188 B1 offenbart ein Verfahren zur Herstellung eines Hohlprofils mit Innenversteifung, insbesondere zur Verwendung bei Automobilkarossen, bei dem ein festes Kernmaterial mit aktivierbarem Material beschichtet und unter Bildung eines definierten Hohlraums ein Außenblech angeordnet ist. Dabei wird der Hohlraum durch den Schäumvorgang des aktivierbaren Materials voll ausgefüllt. Das feste Kernmaterial wird aus einem geschäumten oder ungeschäumten metallischen Werkstoff oder aus einem mit Metallfasern, Kohlefasern oder Glasfasern verstärkten synthetischen Werkstoff oder durch ein Hohlprofil gebildet und das Profil wird vor dem Schäumvorgang des aktivierbaren Materials einem Korrosionsschutztauchbad zugeführt, wobei das Korrosionsschutzmittel in alle Bereiche des Innenprofils gelangt. Anschließend wird das Hohlprofil einem Trockenofen zugeführt und im Trockenofen eine Reaktion des aktivierbaren Materials ausgelöst, wodurch der definiert vorgegebene Hohlraum zwischen dem aktivierbaren Material und dem Außenblech ausgefüllt wird.

Die WO 01/054935 A1 beschreibt ein Versteifungsteil aus einem rohrförmigen Träger und einem darauf angebrachten thermisch expandierbaren Verstärkungsmaterial und einem Befestigungsmittel, welches das Verstärkungsmaterial auf dem Träger fixiert. Das Verstärkungsmaterial kann dabei aus einer Vielzahl von ringförmigen Elementen bestehen, die in axialer Richtung von einander getrennt auf dem Träger angeordnet sind. Nach der Zufuhr von Hitze expandiert das Verstärkungsmaterial und verbindet der Träger mit dem Strukturbauteil des Fahrzeuges um zusätzliche Verstärkung und Versteifung zu erzeugen.

Die WO 01/054936 A1 beschreibt ein Versteifungsteil in Form eines selbst tragenden Körpers, der beim Erhitzen auf eine Expansionstemperatur expandiert. Der Körper enthält eine erste und eine zweite Gruppe von Rippen, die voneinander im Abstand angeordnet sind. Während der Hitzeaktivierung kann die erhitzte Luft zwischen den auf Abstand angeordneten Rippen hindurch strömen, so dass eine größere Oberfläche des Versteifungsmaterials der Hitze ausgesetzt ist, was zu einer verbesserten Expansion führen soll. Beim Erhitzen des Körpers auf die Expansionstemperatur expandiert jede dieser Rippen und berührt die anderen Rippen.

US 6,641,208 B2 beschreibt eine verstärkte Hülse, umfassend einen länglichen Träger und ein Verstärkungsmedium, das von dem Träger getragen wird, wobei sich das Verstärkungsmedium entlang mindestens eines Längenabschnitts des Trägers erstreckt. Der Träger ist hohl und weist an einer Innenwand sich axial erstreckende Rippen auf. Das Verstärkungsmedium ist vorzugsweise ein Epoxid- basiertes Harz. Insbesondere soll das Verstärkungsmedium ein hitzeaktivierbarer Strukturschaum sein.

WO 2003/000535A1 beschreibt ein Strukturverstärkungselement zum Verstärken eines hohlen Strukturelements umfassend ein Verstärkungselement, welches auf einem Abschnitt seiner Oberfläche ein expandierbares Klebe-material aufweist. Die Oberfläche des Verstärkungselements ist mit zwei oder mehr Paaren von Verlängerungen versehen, welche sich der Innenfläche des hohlen Strukturelements annähern, wenn das Verstärkungselement innerhalb des hohlen Strukturelements platziert ist, wobei sich auf der Oberfläche des Verstärkungselements zwischen zumindest zwei der Paare von Verlängerungen kein expandierbares Klebematerial befindet und das expandierbare Klebematerial innerhalb von zumindest zwei der Paare von Verlängerungen so angeordnet ist, dass die Verlängerungen innerhalb derer das expandierbare Klebematerial angeordnet ist, die Expansion des expandierbaren Klebematerials führen. WO 2003/000535 A1 offenbart die Merkmale des Oberbegriffs des Anspruchs 1 und des Oberbegriffs des Anspruchs 2.

Im Hinblick auf den bekannten Stand der Technik haben sich die Erfinder die Aufgabe gestellt, Bauteile zum Versteifen und Verstärken von Hohlträgern bereitzustellen, die ein geringes Gewicht aufweisen, den Hohlträgern hohe Verwindungs- und Biegesteifigkeit verleihen und sich industriell einfach fertigen lassen.

Die erfindungsgemäße Lösung der Aufgabe ist den Patentansprüchen zu entnehmen.

Sie besteht im wesentlichen in der Bereitstellung eines lang gestreckten Trägers, der parallel zur Längsachse eines Hohlträgers anordenbar ist und dessen den Innenseiten der Hohlraumwände des Hohlträgers zugewandten Außenflächen mit einer Schicht einer thermisch expandierbaren und härtbaren Zusammensetzung versehen sind, wobei der Träger in Richtung seiner Längsachse Strömungskanäle aufweist. Die Strömungskanäle haben senkrecht zur Längsachse angeordnete Strömungsöffnungen, deren seitliche Begrenzungen diagonal zur Längsachse des Trägers angeordnet sind.

Ein weiterer Gegenstand der Erfindung ist ein versteifter und/oder verstärkter lang gestreckter Hohlträger, der eine den Hohlraum umschließende Wand oder mehrere den Hohlraum umschließende Wände aufweist. In dem Hohlraum ist ein lang gestrecktes Bauteil angeordnet, das aus einem Träger, der parallel zur Längsachse des Hohlträgers angeordnet ist und auf dessen Außenflächen eine Schicht einer thermisch expandierbaren und härtbaren Zusammensetzung aufgebracht ist, wobei der Träger in Richtung seiner Längsachse Strömungskanäle aufweist. Die Strömungskanäle haben senkrecht zur Längsachse angeordnete Strömungsöffnungen, deren seitliche Begrenzungen diagonal zur Längsachse des Trägers angeordnet sind.

Hohlträger im Sinne dieser Erfindung sind beispielsweise die A-, B- oder C-Säule einer Automobilkarosserie, die die Dachstruktur tragen, weiterhin sind Hohlträger im Sinne dieser Erfindung Dachholmen oder Schweller sowie Teile der Radhäuser oder auch Motorträger.

Die die thermisch expandierbare und härtbare Zusammensetzung tragenden Außenflächen des Trägers sind über Fließkanäle so miteinander verbunden, dass während der Fertigung im Spritzgussverfahren ein kontinuierlicher Fluss der härtbaren Zusammensetzung auf sämtliche dafür vorbestimmte Außenflächen möglich ist.

Das Verstärkungsbauteil ist dabei so dimensioniert, dass das mit der härtbaren Zusammensetzung beschichtete Bauteil im nicht expandierten und nicht gehärteten Zustand zwischen dem Bauteil und den Innenseiten der Hohlraumwände der Automobilsäule allseits einen Flutspalt von bis zu 4 mm Dicke, vorzugsweise bis zu 2 mm Dicke gewährleistet.

Prinzipiell kann der Träger des Verstärkungsbauteils aus einer Vielzahl von Materialien hergestellt werden, vorzugsweise wird er aus thermoplastischen Polymeren im Spritzgussverfahren hergestellt. Bevorzugte thermoplastische Materialien sollen eine geringe Wasser-absorption aufweisen und eine Dimensionsstabilität bis zu 180 °C gewährleisten. Die thermoplastischen Materialien können ausgewählt werden aus Polyamiden, vorzugsweise Polyamid-6, Polyphenylensulfiden (PPS), Polyphenylenether (PPE), Polyphenylensulfonen (PPSU) und Polyphenylenimiden (PPI). Vorzugsweise werden Polyamide eingesetzt, die faserverstärkt sind. Als Fasern können Kurzschnittfasern oder Langfasern verwendet werden, die ausgewählt werden können aus der Gruppe Glasfasern, Polyamidfasern, Polyimidfasern, Kohlenstofffasern, Stahlfasern oder Aluminiumfasern. Besonders bevorzugt sind dabei Glasfasern oder Polyamidfasern. Weiterhin kann der Thermoplast weitere mineralische Füllstoffe enthalten, beispielhaft erwähnt seien gemahlene oder gefällte Kreiden, Ruß, Calcium-, Magnesiumcarbonate, Schwerspat oder deren Mischungen.

Vorzugsweise weist der Träger des Versteifungsbauteils allseits konstante Wandstärken auf. Obwohl die thermisch expandierbare und härtbare Zusammensetzung aus einer Vielzahl von derartigen Zusammensetzungen ausgewählt werden kann, sind solche bevorzugt, die auf Basis von Epoxidharzen, Härtern und Treibmitteln aufgebaut sind, wie sie beispielsweise in der WO 00/52086 A2 oder der WO 2003/054069 A1 sowie der WO 2004/065485 A1 offenbart sind. Diese thermisch expandierbaren und härtbaren Zusammensetzungen werden zur Expansion und Aushärtung auf Temperaturen zwischen 130 °C und 220 °C, vorzugsweise zwischen 130 °C und 180 °C erwärmt, wobei sie expandieren und zu einem festen Strukturschaum aushärten. Üblicherweise erfolgt diese Expansion und Aushärtung in dem Lacktrockenofen, der auf die kathodische Tauchlack-Beschichtung (KTL) der Fahrzeugkarosserie folgt.

Die thermisch expandierbare und härtbare Zusammensetzung ist schichtförmig auf den Außenflächen des Bauteilträgers angeordnet und weist im nicht expandierten Zustand eine Schichtstärke von 2 bis 15 mm, vorzugsweise von 3 bis 10 mm auf. Die Zusammensetzung soll einen Expansionsgrad von 50 bis 100 % gewährleisten.

Die Erfindung umfasst auch eine versteifte und/oder verstärkte hohle Automobilsäule, die in ihrem Hohlraum ein lang gestrecktes Bauteil gemäß vorstehender Beschreibung enthält. Durch Einbringen in den KTL-Ofen wurde die expandierbare und härtbare Zusammensetzung dieses Bauteils bei Temperaturen zwischen 130 und 220 °C, insbesondere zwischen 150 und 180 °C expandiert und ausgehärtet. Hierdurch ist der erwünschte Verbund zwischen den Hohlraumwänden der Automobilsäule und dem verstärkenden lang gestreckten Bauteil hergestellt.

Die Verwendung der erfindungsgemäßen Verstärkungs- und Versteifungsbauteilen mit Strömungskanälen bietet gegenüber den bisher bekannten "kompakten" Bauformen einen Reihe von technischen Vorteilen:
■ Das Gesamtgewicht des Versteifungsbauteils kann reduziert werden, ohne Minderung der verstärkenden und versteifenden Wirkung,
■ Verbesserung des Flusses des KTL-Tauchlackes während der Beschichtung, dadurch gleichmäßigere Schichtstärken der KTL-Beschichtung entlang der Innenwände der Hohlträger,
■ Erhöhter und gleichmäßigerer Fluss der Luft durch den Hohlträger während der Aushärtung im KTL-Ofen, dadurch gleichmäßige Temperaturverteilung und optimale Aushärtung von KTL-Beschichtung und Strukturschaum,
■ Es werden "Schwerpunkt-freundliche" Konstruktionen von Fahrzeugkarosserien ermöglicht, die es erlauben, im oberen Bereich der Karosserie geringere Blechstärken zu verwenden. Auch das geringe Gesamtgewicht der erfindungsgemäßen Verstärkungs- und Versteifungsbauteile trägt zu einer wegen besserer Fahreigenschaften erwünschten Verlagerung des Schwerpunktes des gesamten Fahrzeugs in den unteren Bereich bei. Trotzdem werden gute Ergebnisse im Bezug auf Torsions- und Biegesteifigkeit des Fahrzeugs erzielt.

Eine bevorzugte Ausführungsform der erfindungsgemäßen Bauteile soll nachfolgend anhand einiger Zeichnungen näher erläutert werden. Es zeigen:
- Fig. 1: einen Querschnitt durch den prinzipiellen Aufbau eines Hohlträgers mit dem darin angeordneten Versteifungsteil aus Träger und den Kleberschichten einer thermisch expandierbaren und härtbaren Zusammensetzung,
- Fig. 2: eine halbperspektivische Aufsicht auf die "Oberseite" des Trägers,
- Fig. 3: eine halbperspektivische Aufsicht auf die "Unterseite" des Trägers,
- Fig. 4: eine halbperspektivische Aufsicht auf die breitere Querschnittsseite des Trägers aus Blickrichtung "A" in Fig. 3
- Fig. 5: eine Aufsicht auf die "Unterseite" des Trägers,
- Fig. 6: eine Aufsicht auf die "Oberseite" des Trägers
- Fig. 7: eine halbperspektivische Aufsicht auf die schmalere Querschnittsseite des Trägers aus Blickrichtung "B" in Fig. 6,
- Fig. 8: eine Aufsicht auf die Längsseite des Trägers aus Blickrichtung "C" in Fig. 3 bzw.6,
- Fig. 9: eine halbperspektivische Teilaufsicht auf die "Unterseite" des Trägers im breiteren Bereich des Trägers Blickrichtung "A",
- Fig. 10: eine halbperspektivische Teilaufsicht auf die "Unterseite" des Trägers im mittleren Bereich des Trägers.

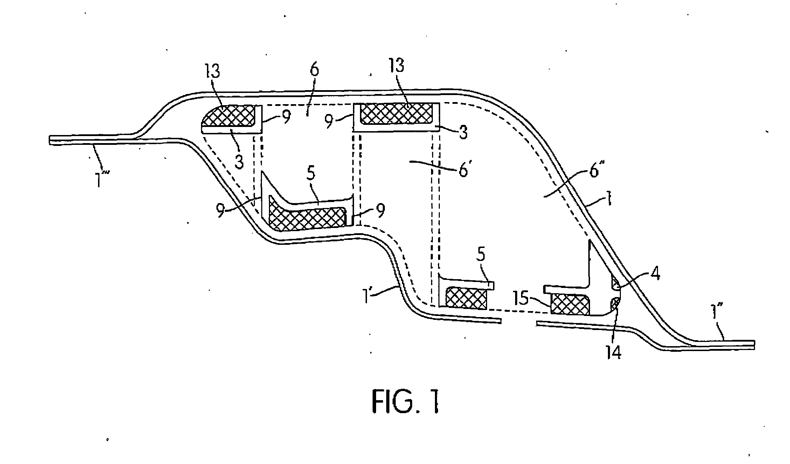

In Fig. 1 ist eine erfindungsgemäß versteifte und/oder verstärkte Automobilsäule in ihrem prinzipiellen Aufbau dargestellt. Dabei ist die Automobilsäule (Hohlträger) aus den beiden Halbschalen (1) und (1') gefertigt, die an den beiden Fügenähten (1 ") und (1'") gefügt sind. Dies kann durch herkömmliche Fügungsverfahren wie Schweißen, Punktschweißen, Verbördeln und/oder Verkleben erfolgen. In dem durch die beiden Halbschalen (1) und (1') gebildeten Hohlraum ist der Querschnitt des Versteifungsteils sichtbar, bestehend aus dem Träger, auf dessen Außenflächen (3), (4) und (5) eine Schicht einer thermisch expandierbaren und härtbaren Kleberzusammensetzung (13, 14, 15) aufgebracht ist. Die Außenflächen (3, 4, 5) des Trägers, die den Innenseiten der Hohlraumwände (1') zugewandt sind werden seitlich durch Begrenzungswände (9) limitiert, die senkrecht zu den Außenwänden in Richtung auf die beiden den Hohlraum umschließende Wände (1, 1') angeordnet sind. Die härtbare Kleberzusammensetzung weist im nicht expandierten Zustand eine Schichtstärke von 2 bis 15 mm, vorzugsweise von 3 bis 10 mm auf und hat einen Expansionsgrad von 50 bis 100 %, wenn sie bei Expansionstemperaturen zwischen 130 °C und 220 °C, vorzugsweise zwischen 150 °C und 180 °C expandiert und aushärtet. Das Trägerbauteil ist so dimensioniert, dass zwischen der Oberseite der nicht expandierten Schichten (13, 14, 15) und der Innenseite der den Hohlraum umschließenden Wände (1, 1') ein Flutspalt von bis zu 4 mm Dicke, vorzugsweise bis zu 2 mm Dicke ausgebildet wird.

Idealerweise wird das Versteifungsteil bestehend aus dem Träger und den Kleberschichten mit einer Halbschale (1 oder 1') vor deren Fügen vormontiert. Diese Vormontage erfolgt im Normalfall mit Hilfe von mechanischen Befestigungsmitteln, so genannten Clipsen, die in entsprechende Bohrungen oder Vorsprünge (in Fig. 1 nicht gezeigt) einer der Halbschalen angeordnet sind.

Der Flutspalt gewährleistet, dass die diversen Prozessflüssigkeiten, mit der die Rohbaukarosserie behandelt wird, alle Teile der Innenseiten der Hohlraumwände benetzen können. Die hier angesprochenen Prozessflüssigkeiten sind Wasch- und Reinigungsbäder, Oberflächenvorbehandlungs- und Passivierungsbäder wie z. B. Phosphatierlösungen, Spülflüssigkeiten sowie die kathodische Tauchlackierung (KTL).

Der Träger weist außerdem Strömungskanäle (6, 6', 6") auf, die in Richtung der Längsachse des Trägers verlaufen. Auf die Funktion der Strömungskanäle wird weiter unten eingegangen.

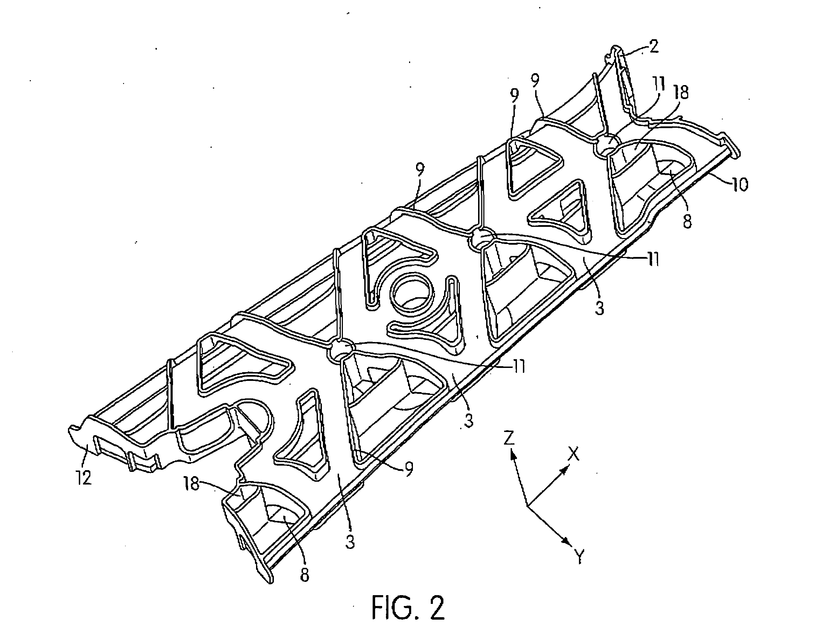

Fig. 2 zeigt eine halbperspektivische Aufsicht auf die "Oberseite" einer bevorzugten Ausführungsform eines Trägers (2). Als "Oberseite" des Trägers wird nachfolgend die Seite des Trägers bezeichnet, die keine herausragenden Befestigungsmittel (Clipse) aufweist. In Fig. 2 sind die Außenflächen (3) der Oberseite des Trägers ohne aufgebrachte expandierbare Kleberzusammensetzung dargestellt. Sichtbar sind weiterhin die seitlichen Begrenzungen (9).

Die seitlichen Begrenzungen ("Kragen") (9) haben eine mehrfache Funktion: einerseits dienen die "Kragen" während des Aufbringens der Schichten auf den Träger im Spritzguss-Prozess als seitliche Begrenzung der Fließrichtung der thermisch expandierbaren und härtbaren Zusammensetzung. Während des thermischen Expansionsvorganges beim Aushärten definieren die "Kragen" die Richtung der Expansion, wobei sie gleichzeitig den Schäumdruck der Zusammensetzung und die Steifigkeit des Trägerkörpers erhöhen.

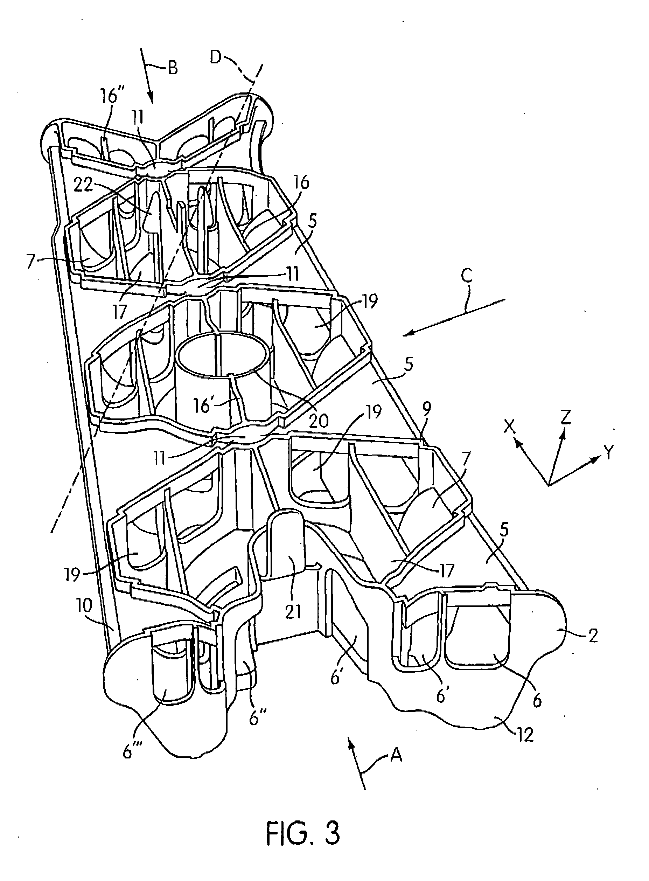

Die Außenflächen (3) der Oberseite sind über die Fließkanäle (11) mit den entsprechenden Außenseiten (5) der Unterseite (in Fig. 2 nicht dargestellt) verbunden, sie verlaufen vorzugsweise in Richtung der Z-Achse des Trägerkörpers senkrecht zu den beiden Außenflächen (3) und (5). Die seitlichen Begrenzungen (9) bilden gleichzeitig die Begrenzungswände der Strömungsöffnungen (8, 18) der Oberseite des Trägers und der Strömungsöffnungen (7, 17) der Unterseite des Trägers, siehe hierzu Fig. 3. Diese seitlichen Begrenzungen sind diagonal, d. h. etwa im Winkel von 45 ° zur Längsachse (der X-Achse) des Trägers angeordnet. Die Y-Achse des Trägers bildet hierbei die senkrecht zur X-Achse verlaufende Querachse des Trägers, während die Z-Achse senkrecht auf der durch die X-Achse und Y-Achse aufgespannte Ebene in Richtung der Ober- bzw. Unterseite des Trägers verläuft. Die oberseitige Außenfläche des Trägers (3) geht mit kontinuierlichen Übergängen in die seitliche Außenfläche (4) des Trägers über, wobei diese seitliche Außenfläche eine zusätzliche Verstärkungsrippe (10) in Richtung der X-Achse des Trägers aufweist. Diese Verstärkungsrippe hat wiederum die Mehrfachfunktion der Begrenzung des Flusses der Kleber-Zusammensetzung während des Spritzgussverfahrens. Sie dient weiterhin zur Definition der Richtung der Expansion der Zusammensetzung während des thermischen Expansionsvorganges, wobei sie ebenfalls gleichzeitig den Schäumdruck der Zusammensetzung und die Steifigkeit des Trägerkörpers erhöht. Die vordere Begrenzungswand (12) dient zur vorderen Begrenzung des Trägers. Sie kann, wie in Fig. 2 dargestellt, einen kontinuierlichen Verlauf in gekrümmter Form mit einer mittigen Einbuchtung aufweisen. Nach oben und unten (in Richtung der Z-Achse) geht diese Begrenzungswand kontinuierlich in die seitliche Begrenzung, den Kragen (9) über.

In Fig. 3 ist eine halbperspektivische Aufsicht auf die "Unterseite" des Trägers (2) dargestellt. Sichtbar ist hier ebenfalls eine halbperspektivische Aufsicht auf die vordere Begrenzungswand (12) des Trägers mit den Durchbrüchen für die Strömungskanäle (6, 6', 6", 6"'), die in Richtung der X-Achse verlaufen. Integral angeformt an die vordere Begrenzungswand ist hier ein Befestigungsclip (21) dargestellt. Weiterhin sichtbar ist auf der linken Seite der Figur der Blick auf die Unterseite der Verstärkungsrippe (10). Wegen der halbperspektivischen Darstellung ist die äquivalente Verstärkungsrippe (10) auf der rechten Seite des Trägers nicht sichtbar. Die unteren Außenflächen (5) des Trägers werden wiederum durch die Kragen (9) seitlich begrenzt, die wie hier deutlich sichtbar diagonal zur X-Achse des Trägers verlaufen. Sichtbar sind weiterhin die "inneren Öffnungen" (19) der Strömungskanäle (6, 6', 6", 6"'). Diese seitlichen Begrenzungen oder Kragen (9) gehen in kontinuierlicher Ausformung im Bereich der Strömungskanäle in die korrespondierenden Kragen (9) der Oberseite über und verlaufen in Richtung der Z-Achse des Trägers. Die Trennwände (16, 16', 16") parallel zur X-Achse des Trägers sind integral mit den senkrecht dazu mit den unteren und oberen Außenflächen des Trägers (5 bzw. 3) ausgeformt. Sie dienen einerseits zur weiteren Versteifung des Trägers durch die Querverbunde mit den Kragen (9) und den oberseitigen und unterseitigen Außenflächen (3, 5) des Trägers. Andererseits gewährleisten sie einen sicheren und kontinuierlichen Fluss sowohl der Prozessflüssigkeiten während der diversen Tauchbäder im Fertigungsablauf der Fahrzeugfertigung. Weiterhin wird hierdurch gewährleistet, dass die heiße Luft während des Einbrenn-Vorganges im KTL-Ofen sowohl an die Innenseiten des Hohlträgers gelangen kann, um eine vollständige Aushärtung der KTL-Beschichtung auf dem Hohlträger zu gewährleisten. Andererseits wird auch sichergestellt, dass diese heiße Luft eine vollständige und gleichmäßige Expansion und Aushärtung der expandierbaren Kleber-Zusammensetzung gewährleistet. Durch die unterseitigen und oberseitigen Strömungsöffnungen (7, 17, 8, 18) können sowohl die Prozessflüssigkeiten als auch die heiße Luft des KTL-Ofens auch in die Bereiche gelangen, die bei einer kontinuierlichen Beschichtung des Trägers mit Kleber-Zusammensetzungen abgeschirmt sein würden. In der Fig. 3 ist weiterhin eine Schnittlinie D-D dargestellt. Diese Schnittlinie deutet die Querschnittsansicht der schematischen Fig. 1 an. Die unteren (5) Außenflächen und oberen (3) Außenflächen mit ihren entsprechenden Kleber-Beschichtungen (15 bzw. 13) sind in Richtung der X-Achse gegeneinander versetzt angeordnet, so dass die Anbindung des Versteifungsteils über den Kleber an die Innenseite des Hohlträgers in Richtung der X-Achse jeweils versetzt angeordnet ist (s. hierzu auch Fig. 1).

Weiterhin sind im oberen Bereich der Fig. 3 weitere Befestigungsclipse (22) parallel zur Z-Achse sichtbar, die zur Befestigung des Verstärkungsbauteils im Rohbau auf einer Hohlträgerschale dienen. In der Mitte der Figur ist ein "Dom" (20) dargestellt. Dieser dient zur Abschottung angrenzender Bereiche, wie z. B. Verbindungselemente der metallischen Bauteile gegen Eindringen des Klebers während der Expansion.

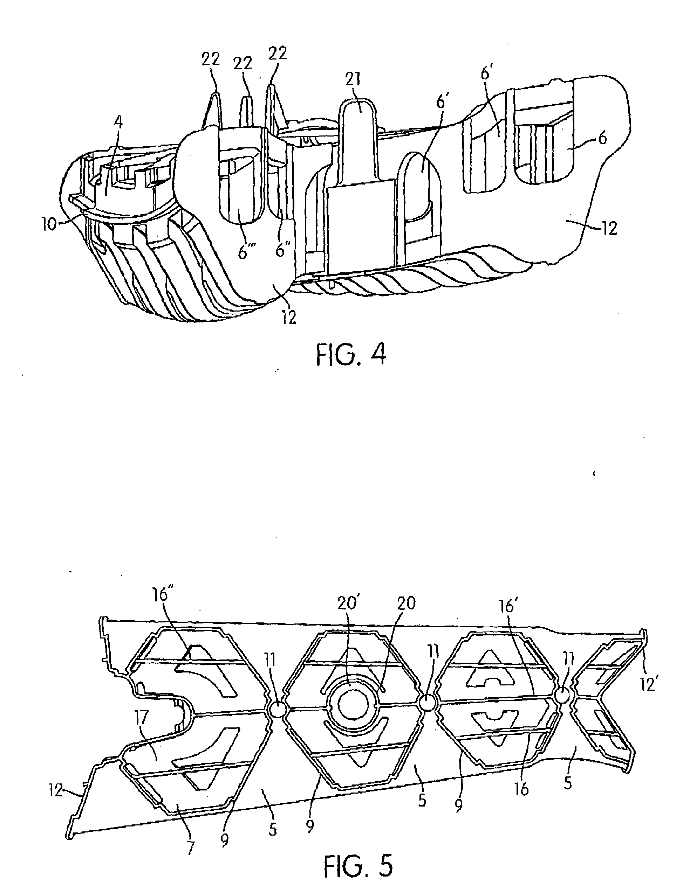

Fig. 4 zeigt eine halbperspektivische Aufsicht auf die vordere (12) Begrenzungswand des Trägers. Diese Blickrichtung ist mit "A" in Fig. 3 gekennzeichnet. Sichtbar sind in der Fig. 4 wiederum zum einen die Aufsicht auf den gekrümmten Verlauf der vorderen Begrenzungswand (12) des Trägers, d. h. die senkrechte Projektion der vorderen Begrenzungswand (12) in Richtung der Z-Achse auf die durch die X- und Y-Achse aufgespannte Ebene bildet keine gerade Linie sondern einen kurvigen Verlauf. Sichtbar sind weiterhin die Durchbrüche in der vorderen Begrenzungswand für die Strömungskanäle (6, 6', 6", 6"'). Weiterhin ist in der Fig. 4 der integral an die vordere Begrenzungswand (12) angeformte Clips (21) sowie die vorspringenden Clipse (22) im hinteren Bereich sichtbar. Deutlich sichtbar ist, dass die seitliche Außenfläche (4) des Trägers einen kontinuierlichen Übergang zu der unteren Außenfläche (5) des Trägers aufweist. Sichtbar ist fernerhin die in Richtung der X-Achse verlaufende Verstärkungsrippe (10).

In Fig. 5 ist eine Aufsicht auf die Unterseite des Trägers in Richtung der Z-Achse dargestellt. Sichtbar sind wiederum die unteren Außenflächen (5) mit den Kragen (9) sowie der nicht lineare Verlauf der vorderen (12) und hinteren (12') Begrenzungswände des Trägers, die im Bereich der Außenflächen (5) integral in die Kragen (9) übergehen. Fernerhin sind die unteren Strömungsöffnungen (7, 17) der in Richtung der X-Achse verlaufenden Strömungskanäle sichtbar, die durch die Trennwände (16, 16', 16") gebildet werden. Ferner sind die Fließkanäle (11), die als Verbindungskanäle zwischen den unterseitigen (5) und oberseitigen (3) Außenflächen dienen, sichtbar, die in Linie mit der mittleren Trennwand (16') angeordnet sind. Durch die Strömungsöffnungen (7, 17) kann man auf die Unterseite der oberen Außenfläche (3) sehen. Weiterhin ist im zentralen Bereich des Trägers der Abschottungsdom (20) sichtbar, der im Bereich der Oberseite einen konzentrischen Flansch (20') aufweist.

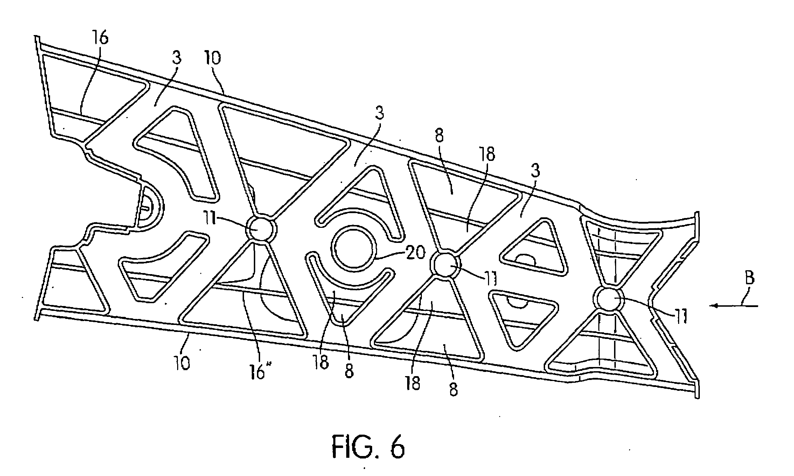

Die Fig. 6 zeigt eine Aufsicht in Richtung der Z-Achse auf die Oberseite des unbeschichteten Trägers. Sichtbar sind hier wiederum die oberseitige Außenfläche (3), die über die Fließkanäle (11) mit den unterseitigen Außenflächen des Trägers verbunden sind. Weiterhin sichtbar sind die Trennwände (16, 16', 16") zwischen den Strömungskanälen sowie die aus den Strömungskanälen herausführenden oberseitigen Strömungsöffnungen (8, 18). Im zentrischen Bereich des Trägers ist wiederum der Dom (20) dargestellt. Weiterhin sind in dieser Aufsicht die beiden seitlichen Verstärkungsrippen (10) in Richtung der Längsachse des Trägers sichtbar.

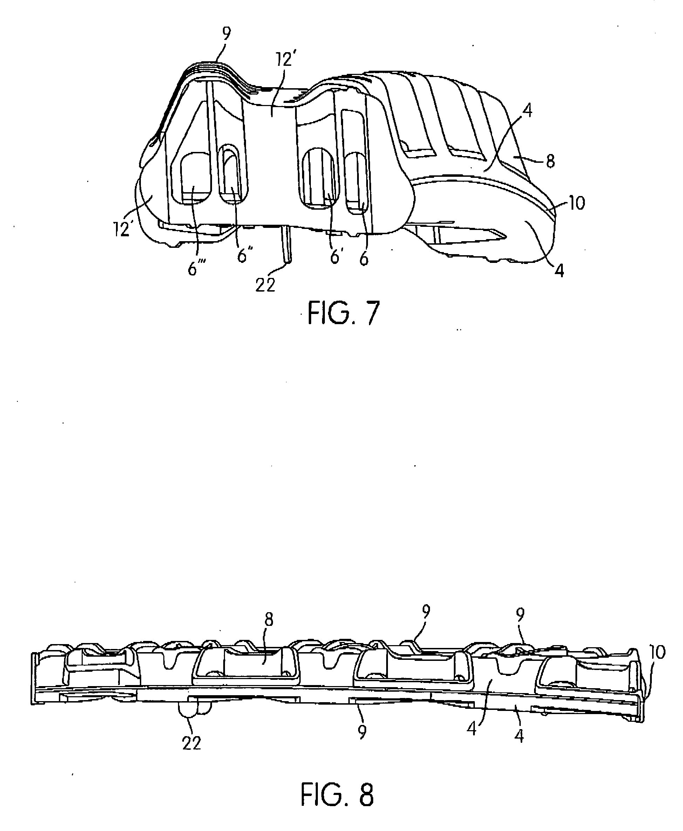

Fig. 7 zeigt eine halbperspektivische Aufsicht auf die hintere Begrenzungswand (12') des Trägers aus der Blickrichtung "B" in Fig. 6. Sichtbar sind wiederum die Ein- bzw. Austrittsöffnungen der Strömungskanäle (6, 6" 6", 6"') in der hinteren Begrenzungswand (12'). Es sind weiterhin die oberseitige und unterseitige Partie der seitlichen Außenfläche (4) des Trägers sichtbar, die durch die seitliche Verstärkungsrippe (10) voneinander getrennt sind. Fernerhin ist aus dieser Ansicht die oberseitige Strömungsöffnung (8) sichtbar sowie die Kragen (9). Im unteren Bereich ist ein Element der Clipse (22) sichtbar.

Fig. 8 zeigt eine Seitenansicht des Trägers in Richtung der X-Achse aus der Blickrichtung "C" in Fig. 3. Sichtbar sind hier wiederum die seitliche Verstärkungsrippe (10) sowie die durch diese Verstärkungsrippe getrennten oberen und unteren Seitenflächen (4). Weiterhin sind sichtbar die oberseitigen Strömungsöffnungen (8) sowie die Kragen (9) und die unterseitigen Befestigungsclipse (22).

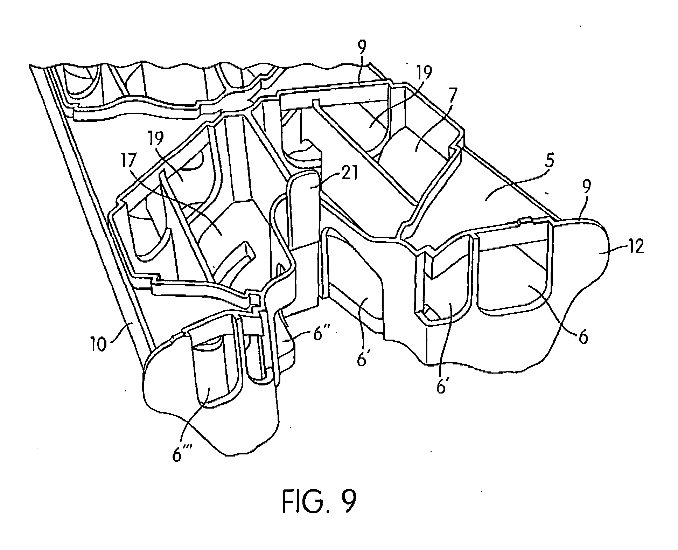

Fig. 9 zeigt eine halbperspektivische Detailansicht auf die vorderseitige Begrenzungswand (12) aus Blickrichtung "A" in Fig. 3. Deutlich sichtbar sind hier wiederum die Öffnungen der Strömungskanäle (6, 6', 6", 6"') in der vorderen Begrenzungswand (12). Fernerhin sind die Kragen (9) sowie die seitliche Verstärkungsrippe (10) sichtbar. Es sind ferner die unterseitigen Strömungsöffnungen (7, 17) sowie die inneren Öffnungen (19) der Strömungskanäle sichtbar. Weiterhin sind die oberen Außenflächen (5) des Trägers erkennbar.

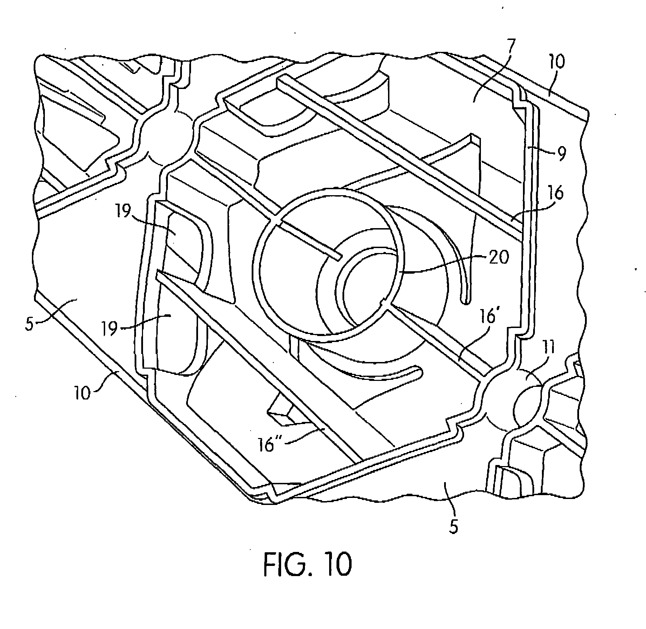

Fig. 10 zeigt eine Detailansicht der Unterseite des Trägers im zentralen Bereich des Doms (20). Deutlich sichtbar sind die Fließkanäle (11) als Verbindungsdurchbrüche zwischen den unterseitigen Außenflächen (5) und den oberseitigen Außenflächen (3). Fernerhin ist in dieser Detailansicht wiederum ein Ausschnitt der seitlichen Verstärkungsrippe (10) sichtbar sowie die inneren Öffnungen (19) der Strömungskanäle, die durch die Trennwände (16, 16', 16") separiert sind.

Die Verwendung der erfindungsgemäßen Verstärkungs- und Versteifungsbauteilen mit Strömungskanälen bietet gegenüber den bisher bekannten "kompakten" Bauformen einen Reihe von technischen Vorteilen:

### Liste der Bezugszeichen

- 1, 1': den Hohlträger umschließende Wände
- 1", 1"': Fügungsbereiche der den Hohlträger umschließende Wände
- 2: Träger
- 3: Außenfläche des Trägers, Oberseite
- 4: seitliche Außenfläche des Trägers
- 5: Außenfläche des Trägers, Unterseite
- 6, 6', 6", 6"': Strömungskanäle
- 7, 17: Strömungsöffnungen, Unterseite
- 8, 18: Strömungsöffnungen, Oberseite
- 9: seitliche Begrenzungen ("Kragen")
- 10: Verstärkungsrippe
- 11: Fließkanäle für thermisch expandierbare und härtbare Zusammensetzung
- 12, 12': "vordere" und "hintere" Begrenzungswände des Trägers
- 13: Schicht einer thermisch expandierbaren und härtbaren Zusammensetzung, "Unterseite"
- 14: seitliche Schicht einer thermisch expandierbaren und härtbaren Zusammensetzung
- 15: Schicht einer thermisch expandierbaren und härtbaren Zusammensetzung, "Oberseite"
- 16, 16', 16": Trennwände zwischen Strömungskanälen
- 19: "innere" Öffnungen der Strömungskanäle
- 20: Dom zur Abschottung angrenzender Bereiche
- 20': Flansch an der Unterseite des Doms
- 21: Clips zur Fixierung des ungeschäumten Bauteiles im Fahrzeug-Rohbau
- 22: Clipse zur Fixierung des ungeschäumten Bauteiles im Fahrzeug-Rohbau

## Patentansprüche

1. Versteifte und / oder verstärkte Automobilsäule enthaltend
• einen lang gestreckten Hohlträger, der eine oder mehrere den Hohlraum umschließende Wände (1, 1') aufweist und
• ein in dem Hohlraum angeordnetes lang gestrecktes Bauteil bestehend aus einem Träger (2), der parallel zur Längsachse (x) des Hohlträgers angeordnet ist und dessen den Innenseiten der Hohlraumwände (1, 1') zugewandten Außenflächen (3, 4, 5) mit einer Schicht (13, 14, 15) einer thermisch expandierbaren und härtbaren Zusammensetzung versehen sind, wobei der Träger in Richtung seiner Längsachse Strömungskanäle (6, 6', 6", 6"') aufweist,
**dadurch gekennzeichnet, dass** die Strömungskanäle senkrecht zur Längsachse angeordnete Strömungsöffnungen (7, 8) aufweisen, deren seitliche Begrenzungen (9) diagonal zur Längsachse angeordnet sind.

2. Lang gestrecktes Bauteil zum Anordnen in dem Hohlraum einer Automobilsäule gemäß Anspruch 1, bestehend aus einem Träger (2), der parallel zur Längsachse (x) des Hohlträgers anordenbar ist und dessen nach Anordnen in dem Hohlraum den Innenseiten der Hohlraumwände (1, 1') zugewandten Außenflächen (3, 4, 5) mit einer Schicht (13, 14, 15) einer thermisch expandierbaren und härtbaren Zusammensetzung versehen sind, **dadurch gekennzeichnet, dass** der Träger in Richtung seiner Längsachse Strömungskanäle (6, 6', 6". 6'") aufweist, **dadurch gekennzeichnet, dass** die Strömungskanäle senkrecht zur Längsachse angeordnete Strömungsöffnungen (7,8) aufweisen, deren seitliche Begrenzungen (9) diagonal zur Längsachse angeordnet sind.

3. Bauteil nach Anspruch 2, **dadurch gekennzeichnet, dass** die mit einer Schicht (13, 14, 15) einer thermisch expandierbaren und härtbaren Zusammensetzung versehenen Außenflächen (3, 5) senkrecht zur z-Achse in Richtung der x-Achse gegeneinander versetzt angeordnet sind.

4. Bauteil nach Anspruch 2 bis 3, **dadurch gekennzeichnet, dass** die seitlichen Begrenzungen (9) gleichzeitig als seitliche Begrenzung für die thermisch expandierbare und härtbare Zusammensetzung ausgebildet sind.

5. Bauteil nach Anspruch 2 bis 4, **dadurch gekennzeichnet, dass** die mit einer Schicht (14) einer thermisch expandierbaren und härtbaren Zusammensetzung versehenen Außenflächen (4), die senkrecht zur y-Achse angeordnet sind, in Richtung der x-Achse eine Verstärkungsrippe (10) aufweisen.

6. Bauteil nach Anspruch 2 bis 5, **dadurch gekennzeichnet, dass** die mit einer Schicht (13, 15) einer thermisch expandierbaren und härtbaren Zusammensetzung versehenen Außenflächen (3, 5) über Fließkanäle (11) miteinander verbunden sind.

7. Bauteil nach Anspruch 2 bis 6, **dadurch gekennzeichnet, dass** nach dessen Anordnen in dem Hohlraum einer Automobilsäule und vor dem Aushärten der thermisch expandierbaren und härtbaren Zusammensetzung zwischen dem Bauteil und den Innenseiten der Hohlraumwände (1, 1') allseits ein Flutspalt von bis zu 4 mm Dicke, vorzugsweise bis zu 2 mm Dicke ausgebildet ist.

8. Bauteil nach Anspruch 2 bis 7, **dadurch gekennzeichnet, dass** der Träger (2) aus Polyamid aufgebaut ist.

9. Bauteil nach Anspruch 8, **dadurch gekennzeichnet, dass** das Polyamid faserverstärkt ist.

10. Bauteil nach Anspruch 9, **dadurch gekennzeichnet, dass** als Fasern Kurzschnittfasern oder Langfasern verwendet werden, ausgewählt aus der Gruppe Glasfasern, Polyamidfasern, Polylmidfasern, Kohlenstofffasern, Stahlfasern oder Aluminiumfasern, besonders bevorzugt Glasfasern oder Polyamidfasern.

11. Bauteil nach Anspruch 9 bis 10, **dadurch gekennzeichnet, dass** das Polyamid weitere mineralische Füllstoffe enthält, ausgewählt aus gemahlenen oder gefällten Kreiden, Ruß, Calcium-Magnesiumcarbonate, Schwerspat oder deren Mischungen.

12. Bauteil nach Anspruch 8 bis 11, **dadurch gekennzeichnet, dass** das Polyamid ein Polyamid-6 ist.

13. Bauteil nach Anspruch 8 bis 12, **dadurch gekennzeichnet, dass** der Träger allseits konstante Wandstärken aufweist.

14. Bauteil nach Anspruch 2 bis 13, **dadurch gekennzeichnet, dass** die thermisch expandierbare und härtbare Zusammensetzung auf Basis von Epoxidharzen, Härtern und Treibmitteln aufgebaut ist.

15. Bauteil nach Anspruch 2 bis 14, **dadurch gekennzeichnet, dass** die thermisch expandierbare und härtbare Zusammensetzung schichtförmig auf den Außenflächen (3, 4, 5) des Trägers (2) angeordnet ist und im nicht expandierten Zustand eine Schichtstärke von 2 bis 15 mm, vorzugsweise von 3 bis 10 mm aufweist.

16. Bauteil nach Anspruch 2 bis 15, **dadurch gekennzeichnet, dass** die thermisch expandierbare und härtbare Zusammensetzung einen Expansionsgrad von 50 bis 100 % hat.

17. Bauteil nach Anspruch 2 bis 16, **dadurch gekennzeichnet, dass** die thermisch expandierbare und härtbare Zusammensetzung bei Temperaturen zwischen 130 und 220 °C, vorzugsweise zwischen 150 und 180 °C expandiert und aushärtet.

18. Versteifte und / oder verstärkte Automobilsäule nach Anspruch 1, **dadurch gekennzeichnet, dass** sie ein in dem Hohlraum angeordnetes lang gestrecktes Bauteil nach einem oder mehreren der Ansprüche 2 bis 17 enthält, dessen expandierbare und härtbare Zusammensetzung bei Temperaturen zwischen 130 und 220 °C, vorzugsweise zwischen 150 und 180 °C expandiert und ausgehärtet wurde.

## Claims

1. A stiffened and/or reinforced automobile pillar comprising
• a lengthwise extended hollow support that possesses one or a plurality of walls (1, 1') enclosing the cavity and
• a lengthwise extended component located in the cavity, which consists of a support (2) that is positioned parallel to the longitudinal axis (x) of the hollow support and whose external surfaces (3, 4, 5) facing the inner sides of the cavity walls (1, 1') are provided with a layer (13, 14, 15) of a thermally expansible and curable composition, wherein the support possesses flow channels (6, 6', 6", 6"') in the direction of its longitudinal axis,
**characterized in that** the flow channels possess flow openings (7, 8) that are arranged perpendicular to the longitudinal axis and whose lateral boundaries (9) are arranged diagonally to the longitudinal axis.

2. A lengthwise extended component for placement in the cavity of an automobile pillar according to claim 1, consisting of a support (2) that may be positioned parallel to the longitudinal axis (x) of the hollow support and, the external surfaces (3, 4, 5) facing the inner sides of the cavity walls (1, 1') after placement are provided with a layer (13, 14, 15) of a thermally expansible and curable composition, **characterized in that** the support possesses flow channels (6, 6', 6", 6"') in the direction of its longitudinal axis, **characterized in that** the flow channels possess flow openings (7, 8) that are arranged perpendicular to the longitudinal axis and whose lateral boundaries (9) are arranged diagonally to the longitudinal axis.

3. The component according to claim 2, **characterized in that** the external surfaces (3, 5) provided with a layer (13, 14, 15) of a thermally expansible and curable composition are perpendicular to the z-axis and offset to one another in the direction of the x-axis.

4. The component according to claim 2 to 3, **characterized in that** the lateral boundaries (9) are designed simultaneously as the lateral boundary for the thermally expansible and curable composition.

5. The component according to claim 2 to 4, **characterized in that** the external surfaces (4) provided with a layer (14) of a thermally expansible and curable composition are perpendicular to the y-axis and possess a reinforcing rib (10) in the direction of the x-axis.

6. The component according to claim 2 to 5, **characterized in that** the external surfaces (3, 5) provided with a layer (13, 15) of a thermally expansible and curable composition are connected to each other over flow channels (11).

7. The component according to claim 2 to 6, **characterized in that** after having been placed in the cavity of an automobile pillar and prior to curing the thermally expansible and curable composition between the component and the inner sides of the cavity walls (1, 1'), a flow gap with a thickness up to 4mm, preferably a thickness of up to 2 mm, is formed on all sides.

8. The component according to claim 2 to 7, **characterized in that** the support (2) is made of polyamide.

9. The component according to claim 8, **characterized in that** the polyamide is fiber-reinforced.

10. The component according to claim 9, **characterized in that** short cut or long fibers are used as the fibers, selected from the group of glass fibers, polyamide fibers, polyimide fibers, carbon fibers, steel fibers or aluminum fibers, particularly preferably glass fibers or polyamide fibers.

11. The component according to claim 9 to 10, **characterized in that** the polyamide comprises additional mineral fillers, selected from ground or precipitated chalks, carbon black, calcium magnesium carbonate, barium sulfate or their mixtures.

12. The component according to claim 8 to 11, **characterized in that** the polyamide is a polyamide-6.

13. The component according to claim 8 to 12, **characterized in that** the support possesses constant wall thicknesses on all sides.

14. The component according to claim 2 to 13, **characterized in that** the thermally expansible and curable composition is based on epoxy resins, curing agents and blowing agents.

15. The component according to claim 2 to 14, **characterized in that** the thermally expansible and curable composition is located in layers on the external surfaces (3, 4, 5) of the support (2) and in the unexpanded state has a layer thickness of 2 to 15 mm, preferably 3 to 1D mm.

16. The component according to claim 2 to 15, **characterized in that** the thermally expansible and curable composition has a degree of expansion of 50 to 100 %.

17. The component according to claim 2 to 16, **characterized in that** the thermally expansible and curable composition expands and cures at temperatures between 130 and 220 °C, preferably between 150 and 180 °C.

18. The stiffened and/or reinforced automobile pillar according to claim 1, **characterized in that** it comprises a lengthwise extended component located in the cavity according to one or more of claims 2 to 17, whose expansible and curable composition was expanded and cured at temperatures between 130 and 220 °C, preferably between 150 and 180°C.

## Revendications

1. Colonne de direction d'automobile rigidifiée et/ou renforcée, contenant
• un support creux étiré en longueur qui présente une ou plusieurs parois (1, 1') renfermant l'espace creux; et
• un composant étiré en longueur disposé dans l'espace creux, constitué par un support (2) qui est disposé parallèlement à l'axe longitudinal (x) du support creux et dont les surfaces externes (3, 4, 5) tournées vers les côtés internes des parois (1, 1') de l'espace creux sont munies d'une couche (13, 14, 15) d'une composition thermoexpansible et thermodurcissable, le support présentant des canaux d'écoulement (6, 6', 6", 6"') dans la direction de son axe longitudinal ;
**caractérisé en ce que** les canaux d'écoulement présentent des ouvertures d'écoulement (7, 8) disposées perpendiculairement à l'axe longitudinal, dont les délimitations latérales (9) sont disposées en diagonale par rapport à l'axe longitudinal.

2. Composant étiré en longueur à agencer dans l'espace creux d'une colonne de direction d'automobile selon la revendication 1, constitué par un support (2) qui peut venir se disposer parallèlement à l'axe longitudinal (x) du support creux et dont les surfaces externes (3, 4, 5) tournées vers les côtés internes des parois (1, 1') de l'espace creux après l'agencement dans l'espace creux, sont munies d'une couche (13, 14, 15) d'une composition thermoexpansible et thermodurcissable, **caractérisé en ce que** le support présente des canaux d'écoulement (6, 6', 6", 6"') dans la direction de son axe longitudinal, **caractérisé en ce que** les canaux d'écoulement présentent des ouvertures d'écoulement (7, 8) disposées perpendiculairement à l'axe longitudinal, dont les délimitations latérales (9) sont disposées en diagonale par rapport à l'axe longitudinal.

3. Composant selon la revendication 2, **caractérisé en ce que** les surfaces externes (3, 5) munies d'une couche (13, 14, 15) d'une composition thermoexpansible et thermodurcissable sont disposées perpendiculairement à l'axe des z, tout en étant décalées les unes des autres dans la direction de l'axe des x.

4. Composant selon les revendications 2 à 3, **caractérisé en ce que** les délimitations latérales (9) sont réalisées pour faire simultanément office de délimitation latérale pour la composition thermoexpansible et thermodurcissable.

5. Composant selon l'une quelconque des revendications 2 à 4, **caractérisé en ce que** les surfaces externes (4) munies d'une couche (14) d'une composition thermoexpansible et thermodurcissable, qui sont disposées perpendiculairement à l'axe des y, présentent une nervure de renforcement (10) dans la direction de l'axe des x.

6. Composant selon l'une quelconque des revendications 2 à 5, **caractérisé en ce que** les surfaces externes (3, 5) munies d'une couche (13, 15) d'une composition thermoexpansible et thermodurcissable, sont reliées les unes aux autres via des canaux d'écoulement (11).

7. Composant selon l'une quelconque des revendications 2 à 6, **caractérisé en ce que**, après son agencement dans l'espace creux d'une colonne de direction d'automobile et avant le durcissement de la composition thermoexpansible et thermodurcissable entre le composant et des côtés internes des parois (1, 1') de l'espace creux, on réalise, de tous côtés, une fente d'écoulement possédant une épaisseur s'élevant jusqu'à 4 mm, de préférence une épaisseur s'élevant jusqu'à 2 mm.

8. Composant selon l'une quelconque des revendications 2 à 7, **caractérisé en ce que** le support (2) est réalisé en polyamide.

9. Composant selon la revendication 8, **caractérisé en ce que** le polyamide est renforcé par des fibres.

10. Composant selon la revendication 9, **caractérisé en ce qu'**on utilise, à titre de fibres, des fibres découpées courtes ou de longues fibres choisies parmi le groupe des fibres de verre, des fibres de polyamide, des fibres de polyimide, des fibres de carbone, des fibres d'acier ou des fibres d'aluminium, de manière particulièrement préférée des fibres de verre ou des fibres de polyamide.

11. Composant selon l'une quelconque des revendications 9 à 10, **caractérisé en ce que** le polyamide contient d'autres substances de remplissage minérales, choisi parmi des craies broyées ou précipitées, du noir de carbone, des carbonates de calcium-magnésium, du sulphate de barium ou leurs mélanges.

12. Composant selon l'une quelconque des revendications 8 à 11, **caractérisé en ce que** le polyamide est un polyamide-6.

13. Composant selon l'une quelconque des revendications 8 à 12, **caractérisé en ce que** le support présente des épaisseurs de parois constantes de tous côtés.

14. Composant selon l'une quelconque des revendications 2 à 13, **caractérisé en ce que** la composition thermoexpansible et thermodurcissable est réalisée à base de résines époxydes, de durcisseurs et d'agents moussants.

15. Composant selon l'une quelconque des revendications 2 à 14, **caractérisé en ce que** la composition thermoexpansible et thermodurcissable est disposée par couche sur les surfaces externes (4, 5) du support (2) et présente, à l'état non expansé, une épaisseur de couche de 2 à 15 mm, de préférence de 3 à 10 mm.

16. Composant selon l'une quelconque des revendications 2 à 15, **caractérisé en ce que** la composition thermoexpansible et thermodurcissable possède un degré d'expansion de 50 à 100 %.

17. Composant selon l'une quelconque des revendications 2 à 16, **caractérisé en ce que** la composition thermoexpansible et thermodurcissable est soumise à une expansion et à un durcissement à des températures entre 130 et 220 °C, de préférence entre 150 et 180 °C.

18. Colonne de direction d'automobile rigidifiée et/ou renforcée selon la revendication 1, **caractérisée en ce qu'**elle contient un composant étiré en longueur disposé dans l'espace creux, selon une ou plusieurs des revendications 2 à 17, dont la composition expansible et durcissable a été soumise à une expansion et à un durcissement à des températures entre 130 et 220 °C, de préférence entre 150 et 180 °C.
